**Europäisches Patentamt**

**European Patent Office**

**Office européen des brevets**

(11) Veröffentlichungsnummer: **0 144 531**
**B1**

(12) **EUROPÄISCHE PATENTSCHRIFT**

(45) Veröffentlichungstag der Patentschrift:
**22.04.87**

(51) Int. Cl.⁴: **H 04 N 9/29**

(21) Anmeldenummer: **84109735.5**

(22) Anmeldetag: **16.08.84**

(54) **Farbfernseher.**

(30) Priorität: **13.12.83 DE 3344927**

(43) Veröffentlichungstag der Anmeldung:
**19.06.85 Patentblatt 85/25**

(45) Bekanntmachung des Hinweises auf die Patenterteilung:
**22.04.87 Patentblatt 87/17**

(84) Benannte Vertragsstaaten:
**DE FR GB IT**

(56) Entgegenhaltungen:
**EP - A - 0 069 840**
**DE - A - 2 835 611**
**FR - A - 2 378 415**

(73) Patentinhaber: **Blaupunkt-Werke GmbH,**
**Robert-Bosch-Strasse 200, D-3200 Hildesheim (DE)**

(72) Erfinder: **Black, Karl-Heinz, Dipl.-Ing.,**
**Kunibertstrasse 4A, D-3200 Hildesheim (DE)**
Erfinder: **Schuchardt, Günter, Ing.grad., Himmelsthürer**
**Strasse 3, D-3200 Hildesheim (DE)**
Erfinder: **Schmadel, Karl-Hans, Mozartstrasse 2,**
**D-3201 Diekholzen 3 (DE)**

(74) Vertreter: **Eilers, Norbert, Dipl.-Phys., Blaupunkt-Werke**
**GmbH Robert-Bosch-Strasse 200, D-3200 Hildesheim**
**(DE)**

## Beschreibung

Die Erfindung betrifft ein Farbfernsehgerät für mehrere Programme und mit während des Programmwechsels wirksamer Stummschaltung und mit einer kurzzeitig einschaltbaren Entmagnetisierungseinrichtung für die Farbbildröhre. Solche Entmagnetisierungseinrichtungen sind erforderlich, um die bei Standortwechsel des Farbfernsehers häufig auftretenden und von nahen fremden Magnetfeldern bedingten Farbstörungen zu beseitigen.

Eine bekannte Entmagnetisierungseinrichtung (z.B. EP 69 840) besteht dazu aus einer auf den Kolben der Farbbildröhre gelegten Entmagnetisierungsspule und einem damit in Reihe geschalteten Kondensator, die zusammen einen stark gedämpften Schwingungskreis bilden. Der Kondensator liegt über einem Ladewiderstand an einer hohen Betriebsspannung und wird dadurch aufgeladen. Zur Entmagnetisierung wird der Schwingungskreis durch einen Schalter geschlossen und dadurch zu einer stark gedämpften Schwingung angeregt. Es ist bekannt, den Schalter von Hand, z.B. in Verbindung mit dem Netzschalter, zu betätigen, so dass die Farbbildröhre bei jedem Einschalten des Farbfernsehers auch entmagnetisiert wird.

Für Geräte mit ständig wechselndem Standort, z.B. Farbfernsehmonitore in Kraftfahrzeugen, ist es auch bereits bekannt, den mechanischen Schalter durch einen Thyristor mit antiparalleler Diode zu ersetzen, der jeweils in der vertikalen Austastlücke automatisch durchgeschaltet wird, so dass die durch den Standortwechsel solcher Geräte besonders häufigen Farbstörungen fortlaufend beseitigt werden. Kleinere tragbare Farbfernseher wechseln nun nicht so häufig den Standort, dass sich der mit dieser Art der Entmagnetisierung verbundene grosse Schaltaufwand lohnt.

Der Erfindung liegt die Aufgabe zugrunde, eine einfache und ausreichend sichere Steuerschaltung für die Entmagnetisierungseinrichtung zu schaffen, deren Aufwand und Kosten besonders bei kleinen tragbaren Farbfernsehern in einem angemessenen Verhältnis zum Preis des Geräts stehen.

Die Erfindung macht davon Gebrauch, dass Farbfernseher heute mit einer Stummschaltung ausgerüstet sind, die bei jedem Programmwechsel den Ton kurzzeitig stummschalten und dadurch unerwünschte Geräusche unterdrücken, und besteht darin, dass die Entmagnetisierungseinrichtung bei jedem Programmwechsel durch die Stummschaltung selbsttätig eingeschaltet wird.

In der Stummschaltung ist die Ausgangsspannung der Koinzidenzstufe bei fehlender Koinzidenz niedrig, nach Eintritt der Synchronisation dagegen hoch. Mit diesem Spannungswechsel kann man die Entmagnetisierungseinrichtung ein- und ausschalten. Die Entmagnetisierungeinrichtung kann in bekannter Weise aus einer auf den Kolben der Farbbildröhre sitzenden Entmagnetisierungsspule und einer damit in Reihe liegenden aufladbaren Kapazität bestehen, die durch einen Thyristor zu einem Parallelschwingkreis für gedämpfte Schwingungen verbunden werden. Zur Schaltung des Thyristors kann die Ausgangsspannung der Koinzidenzstufe über eine Diode mit der Basis eines Schalttransistors verbunden sein, der die aus einer ständig verfügbaren Betriebsspannung abgegriffene Zündspannung für den Thyristor ein- und ausschaltet.

Diese Steuerung der Entmagnetisierungseinrichtung hat den Vorteil, dass die Entmagnetisierung selbsttätig bei jedem Programmwechsel und bei jedem Einschalten des Farbfernsehers kurzzeitig erfolgt und damit in Betrieb stets eine gute Bildqualität sichert. Da die Betriebsspannung für den Schwingkreis nicht von der Netzspannung sondern vom Schaltnetzteil abgegriffen wird, kann sie ausreichend bemessen und sicher bereitstehen. Der Schaltungsaufwand für die Steuerung der Entmagnetisierung ist gering, da die Stummschaltung ohnehin im Gerät vorhanden ist und das erforderliche Schaltsignal bereitstellt.

Die Anwendung dieser Steuerung ist nicht auf kleinere, tragbare Farbfernseher beschränkt, sondern auch bei Standgeräten möglich, sofern sie mit Stummschaltung beim Programmwechsel arbeiten.

Die Zeichnung bringt ein Schaltbeispiel für die Erfindung.

Dabei zeigen:

Fig. 1 das Blockschaltbild eines Farbfernsehers mit Stummschaltung und Entmagnetisierungseinrichtung und

Fig. 2 ein Schaltbild für die Entmagnetisierungseinrichtung.

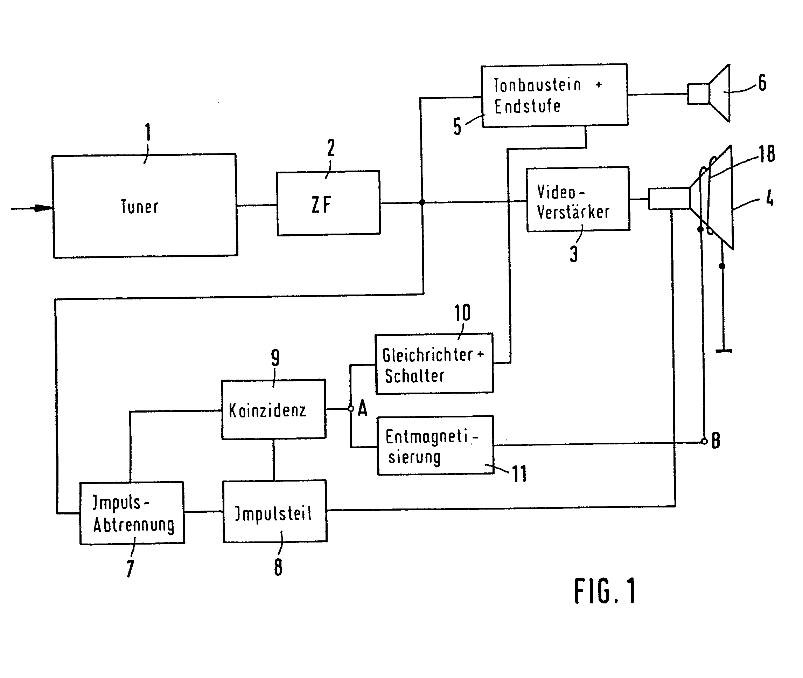

Laut Fig. 1 gelangt das vom Tuner 1 aufgenommene Fernsehsignal nach der üblichen Verstärkung, Filterung und Mischung auf die Zwischenfrequenzstufe 2, in der es verstärkt und demoduliert wird. Von der Zwischenfrequenzstufe 2 gelangt das demodulierte Signal einerseits auf den Videoverstärker 3, der die Kathode 4 einer Farbbildröhre steuert und andererseits auf einen Tonbaustein 5, der in üblicher Weise aus einem Zwischenfrequenzteil, einem Demodulator und einem Niederfrequenzverstärker zu einer Tonendstufe, die den Ton auf den Lautsprecher 6 gibt, dessen Lautstärke in bekannter Weise über einen Lautstärkeregler im Tonbaustein 5 bis auf 0 geregelt werden kann.

Für die Stummschaltung des Lautsprechers 6 werden in der Impuls-Abtrennstufe 6 die Synchronimpulse aus dem Videosignal abgetrennt. Die von den Synchronimpulsen beeinflussten Stufen sind in Fig. 1 als Impulsteil 8 zusammengefasst, das die Elektroden und das Ablenksystem der Farbbildröhre 4 steuert. Von der Impuls-Abtrennstufe 7 gelangen die Zeilensynchronimpulse auf den Ausgang einer Koinzidenzstufe 9, deren zweiter Eingang von den Zeilenrücklauf-Impulsen eines Zeilenoszillators im Impulsteil 8 gespeist wird. In der Koinzidenzstufe 9 entsteht nur dann ein wirksames Ausgangssignal, wenn die an den Eingängen empfangenen Zeilen Synchronimpulse in Phase und Frequenz übereinstimmen und damit der Fernsehempfänger auf das empfangene Fernsehsignal synchronisiert ist, d.h. ein Sender gefunden ist.

Während einer Programmumschaltung oder beim Einschalten des Farbfernsehers herrscht zunächst keine Koinzidenz und ist deshalb die Ausgangsspannung am Punkt A der Koinzidenzstufe 9 niedrig, so dass die Gleichrichterstufe mit Schalter 10 den Niederfrequenzverstärker im Tonbaustein 5 auf 0 stellt, z.B. den Lautstärkeregler überbrückt, und dadurch jeden störenden Ton im Lautsprecher 6 unterdrückt. Ist ein neuer Sender gefunden und damit Koinzidenz hergestellt, dann ist die Ausgangsspannung der Koinzidenzstufe 9 am Punkt A hoch und die Gleichrichterstufe mit Schalter 10 beeinflusst den Ton nicht mehr. Soweit ist die Schaltung bekannt.

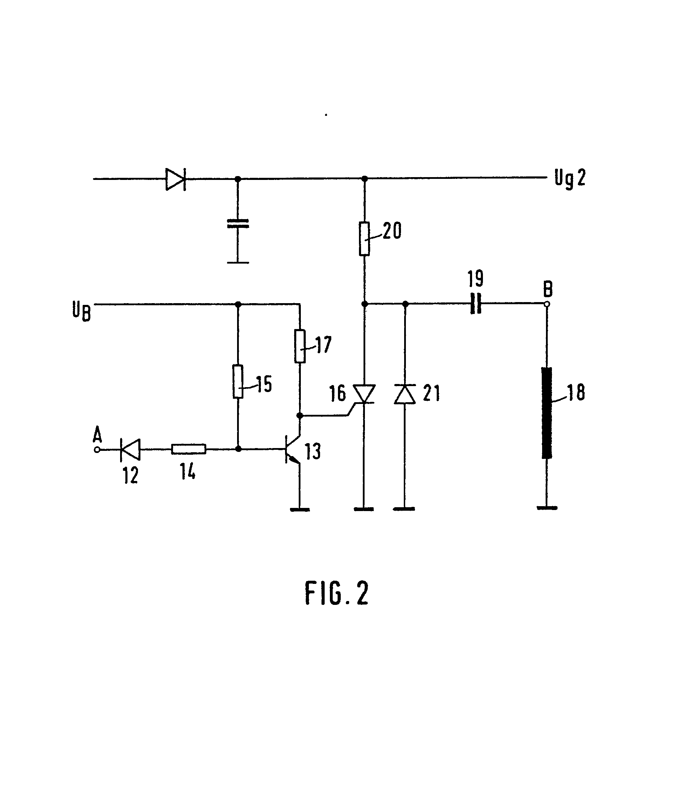

Mit der Spannungsänderung am Punkt A der Stummschaltung wird laut Erfindung nun auch die Entmagnetisierungseinrichtung 11 der Farbbildröhre 4 gesteuert, deren Schaltung Fig. 2 zeigt. Punkt A ist dazu mit einer Diode 12 verbunden, die den Transistor 13 steuert, dessen Basis über den Spannungsteiler aus den Widerständen 14, 15 an der festen Betriebsspannung $U_B$ und dessen Emitter an Masse liegen, während der Kollektor einerseits mit der Steuerelektrode des Thyristors 16 und andererseits über den Widerstand 17 ebenfalls mit der festen Betriebsspannung $U_B$ verbunden ist. Der Schwingkreis für die Entmagnetisierung der Farbbildröhre 4 besteht aus der Induktivität der Entmagnetisierungsspule 18, die einerseits an Masse und andererseits über einen Ladekondensator 19 mit der Anode des Thyristors 16 und weiter über einen Ladewiderstand 20 mit einer hohen Betriebsspannung, z.B. der Schirmgitterspannung $U_{g2}$ der Farbbildröhre 4 verbunden ist. Die Kathode des Thyristors 16 liegt an Masse. Antiparallel zum Thyristor 16 ist eine Diode 21 geschaltet.

Die Schaltung arbeitet folgendermassen. Während des Empfangs lädt sich der Kondensator 19 über den Ladewiderstand 20 auf. Bei Programmumschaltung und damit fehlender Koinzidenz ist die Ausgangsspannung an Punkt A niedrig, so dass der Ton stummgeschaltet wird. Zugleich wird in der Entmagnetisierungseinrichtung 11 die Diode 12 leitend und sperrt der Transistor 13. Dadurch erhält die Steuerelektrode des Thyristors 16 die nötige Zündspannung und schaltet der Thyristor durch. Jetzt wird der Parallelschwingkreis geschlossen, kann sich der Kondensator 19 entladen und entsteht eine durch den Serienwiderstand der in Punkt B der Schaltung angeschlossenen Entmagnetisierungsspule 18 eine stark gedämpfte Schwingung. Die Dauer der Entmagnetisierung wird durch die Induktivität der Entmagnetisierungsspule 4, deren Serienwiderstand und die Grösse des Kondensators 19 bestimmt und soll der Dauer der Tonunterdrückung angepasst sein. Sobald ein neuer Sender gefunden und Koinzidenz wieder hergestellt ist, wird die Spannung an Punkt A hoch, sperrt die Diode 12 und wird der Transistor 13 leitend. Damit bricht die Zündspannung an der Steuerelektrode des Thyristors 16 zusammen und der Thyristor sperrt, worauf sich der Kondensator 19 wieder aufladen und sich die Entmagnetisierung beim nächsten Programmwechsel wiederholen kann, sofern die Zeitkonstanten im Stummschaltkreis und $U_B$ entsprechend bemessen sind.

Man kann die Entmagnetisierungseinrichtung auch mit anderen Stummschaltungen, als im Beispiel beschrieben, einschalten, sofern sie ein gleichwertiges Schaltsignal beim Programmwechsel bereitstellen.

## Patentansprüche

1. Farbfernseher mit Stummschaltung beim Programmwechsel und einer schaltbaren Entmagnetisierungseinrichtung für die Farbbildröhre, dadurch gekennzeichnet, dass die Entmagnetisierungseinrichtung bei jedem Programmwechsel durch die Stummschaltung selbsttätig eingeschaltet wird.

2. Farbfernseher nach Anspruch 1, bei dem die Entmagnetisierungseinrichtung aus einer Entmagnetisierungsspule auf dem Kolben der Farbbildröhre und einer damit in Reihe liegenden aufladbaren Kapazität besteht, die durch einen Thyristor zu einem Parallelschwingkreis für gedämpfte Schwingungen geschaltet werden, dadurch gekennzeichnet, dass der Thyristor (16) durch die Ausgangsspannung (Punkt A) der Koinzidenzstufe (9) in der Stummschaltung gesteuert ist.

3. Farbfernseher nach den Ansprüchen 1 und 2, dadurch gekennzeichnet, dass die Ausgangsspannung der Koinzidenzstufe (9) über eine Diode (12) mit der Basis eines Schalttransistors (13) verbunden ist, der aus einer ständig verfügbaren Betriebsspannung ($U_B$) die Zündspannung für den Thyristor (16) ein- und ausschaltet.

## Claims

1. Colour television set with programme change muting and a switchable degaussing device for the colour picture tube, characterized in that the degaussing device is automatically switched on at each programme change by the muting circuit.

2. Colour television set according to Claim 1, in which the degaussing device consists of a degaussing coil on the bulb of the colour picture tube and a chargeable capacitor in series with it, which are switched by a thyristor to a parallel resonant circuit for damped oscillations, characterized in that the thyristor (16) is controlled by the output voltage (point A) of the coincidence stage (9) in the muting circuit.

3. Colour television set according to claims 1 and 2, characterized in that the output voltage of the coincidence stage (9) is connected via a diode (12) to the base of a switching transistor (13), which uses a constatly available operating voltage ($U_B$) to switch the gate trigger voltage for the thyristor (16) on and off.

## Revendications

1. Téléviseur en couleur avec circuit de silence pour le changement de programme et un dispositif de désaimantation, susceptible d'être commuté pour le tube cathodique couleur, téléviseur caractérisé en ce que le dispositif de désaimantation est mis en oeuvre automatiquement à chaque changement de programme par le circuit de silence.

2. Téléviseur en couleur selon la revendication 1, dans lequel le dispositif de désaimantation se compose d'une bobine de désaimantation montée sur le col du tube cathodique et un condensateur susceptible d'être chargé, en série avec celui-ci et qui sont branchés suivant un circuit parallèle pour des oscillations amorties par l'intermédiaire d'un thyristor, téléviseur caractérisé en ce que le thyristor (16) est commandé par la tension de sortie (point A) de l'étage de coïncidence (9) du circuit de silence.

3. Téléviseur en couleur selon les revendications 1 et 2, caractérisé en ce que la tension de sortie de l'étage de coïncidence (9) est appliquée par l'intermédiaire d'une diode (12) à la base d'un transistor de commutation (13) qui branche ou coupe la tension d'allumage du thyristor (16) à partir d'une tension de fonctionnement ($U_B$) disponible en permanence.

FIG. 1

6

18

4

B

Tonbaustein + Endstufe

5

Video - Verstärker

3

Gleichrichter + Schalter

10

Entmagneti - sierung

11

ZF

2

A

Koinzidenz

9

Jmpulsteil

8

Tuner

1

Jmpuls - Abtrennung

7

FIG. 2